# EUROPEAN PATENT APPLICATION

(11) **EP 3 320 763 A1**
(43) Date of publication of application: **16.05.2018**
(21) Application number: 16198808.4
(22) Date of filing: 15.11.2016
(51) Int. Cl.: A01B 1/06

(54) **SUBSURFACE CUTTING TOOL**

(71) Applicant: Purgo i Varberg AB, 432 21 Varberg (SE)
(72) Inventor: Andersson, Per-Olof, 432 95 VARBERG (SE); Andersson, Lars-Erik, 432 95 VARBERG (SE)
(74) Representative: Awapatent AB

(57) **Abstract**

The present invention relates to a motorized weed chopper for soil preparation or weed removal having a mass M kg, said motorized weed chopper comprising a shaft comprising a first and a second end portion, wherein said first end portion comprises a handle and said second end portion comprises a blade, wherein said motorized weed chopper further comprises a drive unit arranged to oscillate said blade in a geometric plane, wherein said blade has a surface area A cm² in said geometric plane and wherein the ratio of said surface area A cm² to said mass M kg is 18:1 - 34:1, preferably 22:1 - 30:1, and most preferably 26:1.

## Description

### Field of the Invention

The present invention relates to a motorized weed chopper for soil preparation or weed removal.

### Background

When clearing a patch of land from weeds or when soil is to be prepared for planting plants, a rake, hoe, or tiller is normally used. The preparation of soil and/or removal of weeds is often manual labor, but can also be done with motorized variants of the abovementioned tools. A problem with using normal tools is that the work is inefficient, time consuming and physically demanding. A problem with using motorized variants of these tools is that the tools are often very heavy and cumbersome.

### Summary of the Invention

An object of the present invention is to alleviate the abovementioned problems and provide a motorized weed chopper arranged so that a user can prepare soil and/or remove weeds effectively while not having to carry the full weight of the motorized weed chopper.

The above and other objects which will be evident from the following description are achieved by a motorized weed chopper according to the present invention.

According to a first aspect of the present invention, a motorized weed chopper for soil preparation or weed removal is provided, the motorized weed chopper having a mass M kg, the motorized weed chopper comprising a shaft having a first and a second end portion, wherein the first end portion is provided with a handle and the second end portion is provided with a chopping unit, which comprises a blade and a drive unit arranged to oscillate the blade in a geometric plane, wherein the blade has a surface area A cm² in the geometric plane and wherein the ratio of the surface area A cm² to the mass M kg is 18:1 - 34:1, preferably 22:1 - 30:1, and most preferably 26:1.

It should be understood that the blade is substantially flat and that it has an upward facing side and a downward facing side. The downward facing side is the side of the blade which is intended to face and be substantially parallel with the ground during use of the motorized weed chopper. It should also be understood that the surface area A of the blade only refers to the area of the downward facing side of the blade, i.e. the surface area A does not refer to the total surface area of every side of the blade.

It should be understood that the mass M refers to the total mass of the motorized weed chopper, including any blades, drive units, harness or safety measures connected thereto.

By having the ratio of the surface area A cm² to the mass M kg be in the range of 18:1 - 34:1, a floatation effect is achieved when the motorized weed chopper is used, i.e. the motorized weed chopper is arranged such that the blade cuts into soil and upon oscillation, the blade carries the weight of the motorized weed chopper without sinking further down into the soil. Thus, a user of the motorized weed chopper does not have to carry the full weight of the device when using it to prepare soil or to remove weeds. This enables the user to move the motorized weed chopper in a direction which is parallel with the geometric plane without having to carry the full weight of the motorized weed chopper. This enables a more quick and efficient removal of weeds and/or preparation of soil.

According to one example embodiment of the first aspect of the present invention, the center of gravity of the motorized weed chopper lies at least 75 % towards the second end of the shaft, measured along a line extending from the first end to the second end of the shaft.

By having the center of gravity arranged closer to the blade than to the handle, it is ensured that the blade does not have to take up any significant amount of bending moment resulting from the weight of the motorized weed chopper.

According to one example embodiment of the first aspect of the present invention, the blade comprises cutting edges arranged so that when the blade oscillates, the blade cuts in every direction in the geometric plane.

The term cuts in every direction in the geometric plane should be understood as meaning that the soil surrounding the blade is stirred or set in motion by the oscillations of the blade. This enables the blade to be easily moved in the direction of the non-stationary soil, as the soil provides less resistance once it is set in motion. By having the blade cut in every direction in the geometric plane, a more efficient weed removal is achieved. Also, the reliability of the weed chopper is increased by having the blade cut in every direction in the geometric plane, as this decreases the risk of the blade becoming caught on a denser portion of the soil or on any impurities in the soil, i.e. by arranging the edges of the blade as described above, the motorized weed chopper cuts through any impurities or denser portions of the soil instead of stopping when these are encountered.

The oscillations referred to should be understood as being repeating movements of the blade between two extreme positions, wherein said repeating movement follows a path curved around a rotational axis. The rotational axis is at least partly aligned with the drive unit. The term "cuts in every direction in the geometric plane" is to be understood as meaning that the edges of the blade are distributed so that when the drive unit causes the blade to oscillate, the blade cuts in 360° around the rotational axis of the oscillating movement of the blade.

According to one example embodiment of the first aspect of the present invention, the blade has a hexagonal shape.

By having the blade shaped in a hexagonal shape, it is ensured that the blade is easy and cheap to produce. For example, more complex shapes, e.g. shapes comprising undercuts and/or irregular curvatures, are more time consuming and costly to produce. Furthermore, having the blade shaped in a hexagonal shape allows for cutting in 360° in the geometric plane. The blade being hexagonal is to be understood as meaning that the blade comprises sharpened edges on all six sides.

According to one exemplary embodiment of the present invention, the blade has a tetragonal shape or a pentagonal shape.

By having the blade shaped in a tetragonal or pentagonal shape, it is ensured that the blade is easy and cheap to produce. For example, more complex shapes, e.g. shapes comprising undercuts and/or irregular curvatures, are more time consuming and costly to produce. Furthermore, having the blade shaped in a tetragonal or pentagonal shape allows for cutting in 360° in the geometric plane. The blade being either tetragonal or pentagonal is to be understood as meaning that the blade comprises sharpened edges on all four or five sides, respectively.

According to one example embodiment of the first aspect of the present invention, the drive unit comprises an electric motor.

By having an electric motor, the oscillation frequency of the blade can be precisely controlled and adjusted to meet the needs of the application. The electric motor could for example be connected to and powered by a battery unit provided on the motorized weed chopper, or connected to and powered by an external electrical power source.

According to one exemplary embodiment of the first aspect of the present invention, the drive unit is a combustion engine.

By providing the motorized weed chopper with a combustion engine as a drive unit, a cheap and reliable drive unit solution is achieved.

According to one example embodiment of the first aspect of the present invention, the motorized weed chopper further comprises a control unit connected to the drive unit, wherein the control unit is arranged to allow a user to control an oscillation frequency of the blade.

By being able to control the oscillation frequency of the blade, the motorized weed chopper may be used more efficiently in different types of soils. For example, if the soil that is to be prepared is moist or wet, a user may have to decrease the oscillation frequency in order to prevent the blade from becoming stuck in the soil. Conversely, if the soil that is to be prepared is dry, the user may want to increase the oscillation frequency in order to increase the efficiency of the soil preparation/weed removal.

Being able to control the oscillation frequency of the blade is also important when using the motorized weed chopper with different types of soils. For example, using the motorized weed chopper in soil comprising a large portion of clay may require that the oscillation frequency is lowered compared to when the motorized weed chopper is used in soil comprising a large portion of sand, as clay-rich soil may hold more moisture than sandy soil. Having a too high oscillation frequency may cause the blade to become stuck due to a capillary effect created by water present in the soil. I.e., this capillary effect makes efficient use of the motorized weed chopper in moist soil difficult if the oscillating frequency is too high. Having a too low oscillation frequency may cause the soil that is to be prepared to settle around the blade, thus preventing the creation of the floatation effect.

According to one example embodiment of the first aspect of the present invention, the geometric plane is substantially perpendicular to a gravitational direction.

The geometric plane in which the blade oscillates being arranged so that it is perpendicular to a gravitational direction ensures that the floatation force caused by the oscillation of the blade is directed directly opposite the gravitational force. This prevents the motorized weed chopper from being inclined towards pulling away from or pushing towards the user once the drive unit is activated.

According to one example embodiment of the first aspect of the present invention, the drive unit is arranged to oscillate the blade with an oscillation frequency of at least 10 Hz.

According to one exemplary embodiment of the first aspect of the present invention, the oscillation frequency is 10 - 100 Hz, preferably 10 - 50 Hz, and most preferably 10 - 30 Hz.

According to one exemplary embodiment of the first aspect of the present invention, the oscillation frequency is 20 Hz.

Having the blade oscillate at the abovementioned oscillation frequency allows the motorized weed chopper to float through the soil that is to be prepared while carrying its own weight due to the created floatation effect.

According to one example embodiment of the first aspect of the present invention, the drive unit is arranged to oscillate the blade so that a ratio of a cutting area Ac cm² to the surface area A cm² of the blade is 6:5 - 3:2, preferably 5:4 - 4:3, and most preferably 4:3, wherein the cutting area Ac cm² is the area covered by the blade when the blade is caused to oscillate.

It has been found that an effective combination of cutting area and surface area can be achieved when using the abovementioned ratio of cutting area to surface area of the blade.

According to one example embodiment of the first aspect of the present invention, the drive unit is arranged to oscillate the blade so that a ratio of a cutting area Ac cm² to the mass M kg is 24:1 - 45:1, preferably 29:1 - 40:1, and most preferably 35:1, wherein the cutting area Ac cm² is the area covered by the blade when the blade is caused to oscillate.

It has been found that an effective combination of cutting area and surface area can be achieved when using the abovementioned ratio of cutting area to mass of the motorized weed chopper.

According to one example embodiment of the first aspect of the present invention, the blade is removable from the second end portion so that the blade can be replaced by a second blade.

According to one example embodiment of the first aspect of the present invention, the motorized weed chopper further comprises a blade mount located adjacent to the second end portion of the shaft, and wherein the blade is connected to and removable from the blade mount.

By having the blade arranged to be removable, the blade can be removed and replaced in case it becomes dull by extended or improper use. Having the blade arranged to be removable also enables the use of different kinds of blades, wherein certain blades may be more suited for certain kinds of soil.

According to one example embodiment of the first aspect of the present invention, an edge of the blade is straight.

The edge of the blade being straight is to be understood as meaning that the blade is not provided with a saw-toothed or serrated edge.

By having a straight edge, a cheaper and more durable blade is achieved. Thus, there is no teeth of the blade that runs a risk of being damaged when operating the motorized weed chopper.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above, as well as additional objects, features and advantages of the present invention, will be better understood through the following illustrative and non-limiting detailed description of exemplary embodiments of the present invention, with reference to the appended drawing, wherein:
Figure 1 a is a perspective view of a motorized weed chopper according to an exemplary embodiment of the present invention,
Figure 1b is a second perspective view of the motorized weed chopper of Figure 1 a,
Figure 2 is a detailed perspective view of a portion of the motorized weed chopper of Figure 1 a,
Figure 3 is a schematic view showing the blade and the area covered by the blade as it oscillates.

### Detailed description of the drawings

In the present detailed description, embodiments of a motorized weed chopper according to the present invention are mainly discussed with reference to a drawing showing a motorized weed chopper with components and portions being relevant in relation to various embodiments of the invention. It should be noted that this by no means limits the scope of the invention, which is also applicable in other circumstances for instance with other types or variants of a motorized weed chopper than the embodiments shown in the appended drawings. Further, that specific features are mentioned in connection to an embodiment of the invention does not mean that those components cannot be used to an advantage together with other embodiments of the invention.

The invention will now by way of example be described in more detail by means of embodiments and with reference to the accompanying drawings.

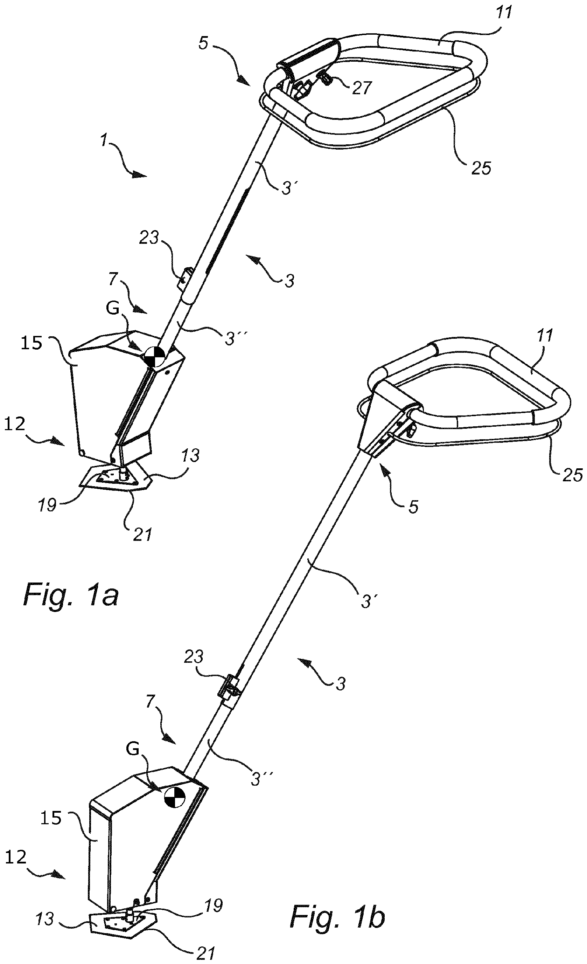

Figures 1 a and 1 b are perspective views of a motorized weed chopper 1. The motorized weed chopper 1 comprises a shaft 3 comprising a first end 5 and a second end 7. A handle 11 is provided adjacent to the first end 5, and a chopping unit 12 comprising a blade 13 and a drive unit 15 is provided adjacent to the second end 7 of the shaft 3. The blade 13 has a substantially hexagonal shape and is connected to the motorized weed chopper 1 by fastening means 17 attaching the blade 13 to a blade mount 19. The blade mount 19 is arranged to allow the blade 13 to be replaced by a second blade, wherein the second blade can be substantially identical to the first blade 13 or it could otherwise have a different shape and/or surface area than the first blade 13. Thus, a user can replace the blade 13 once it becomes worn down by extended use or if a different blade is required.

The drive unit 15 is arranged to impart an oscillating movement to the blade 13, e.g. such that the blade 13 oscillates about a rotational axis. The drive unit 15 can for example be arranged such that it causes the blade 13 to move between two extreme positions, each extreme location being located at a 15° angular offset from a starting position of the blade 13. When the motorized weed chopper 1 is used, the blade 13, owing to the fact that it is substantially planar and provided with circumferentially extending edges 21, cuts into soil and cuts the roots of weeds as a result of the oscillating movement.

When the drive unit 15 causes the blade 13 to oscillate and the blade 13 is immersed into soil, a floatation effect is achieved. This effect is achieved due to the combination of having an oscillating blade 13, and the motorized weed chopper 1 having a ratio of the surface area A cm² of the blade 13 to the mass M kg of the motorized weed chopper 1 that is 26:1. The mass M of the motorized weed chopper 1 in the illustrated embodiment is 6 kg and the surface area A of the blade 13 is 156 cm². By having the oscillations of the blade 13 create a floatation effect, a user of the motorized weed chopper 1 can more easily maneuver it through a plot of land as the user does not have to carry the full weight of the motorized weed chopper 1 unassisted.

The shaft 3 further comprises a first half 3', a second half 3" and a length adjusting device 23 arranged adjacent to a lower end of the first half 3'. The length adjusting device 23 is arranged to allow a user to adjust the length of the shaft by means of loosening and tightening a friction fit between the first half 3' and the second half 3" of the shaft 3. As such, the length adjusting device 23 enables a user to adapt the motorized weed chopper 1 so that ergonomic and efficient use of the device is allowed irrespective of the length of the user. Adjusting the length of the shaft 3 to a length that is suitable for a user allows that user to lower the risk of the blade 13 being arranged in an orientation that is not perpendicular to the gravitational direction, thus lowering the risk of the oscillating movement of the blade 13 not being able to create the floatation effect.

The shaft 3 comprises a dead man's switch 25 located adjacent to the first end 5 of the shaft 3 and which is connected to the drive unit 15. The dead man's switch 25 is arranged so that the motorized weed chopper 1 can only be used when a user holds down the dead man's switch 25. Thus, a more secure and fail-safe motorized weed chopper 1 is achieved.

The shaft 3 further comprises a control unit 27 located adjacent to the first end 5 of the shaft 3 and electrically connected to the drive unit 15. The control unit 27 is arranged to allow a user to control the frequency of the oscillations imparted by the drive unit 15 onto the blade 13. The control unit 27 can for example be arranged to control the drive unit 15 such that oscillations having a frequency of 5 - 50 Hz, preferably 10 - 50 Hz, and most preferably 20 - 40 Hz, are imparted onto the blade 13. Thus, a user can for example increase or decrease the oscillation frequency of the blade 13 when the user detects that this is necessary, e.g. when the blade 13 becomes stuck, when the soil characteristics change, or when the motorized weed chopper 1 becomes difficult to control. Thus, the floatation effect can be maintained even though the soil characteristics may change over different portions of a plot of land.

The mass distribution of the motorized weed chopper 1 in the illustrated embodiment is such that the center of gravity G of the motorized weed chopper 1 is located about 85 % towards the second end 7 of the shaft 3, measured along a line extending from the first end 5 to the second end 7 of the shaft 3.

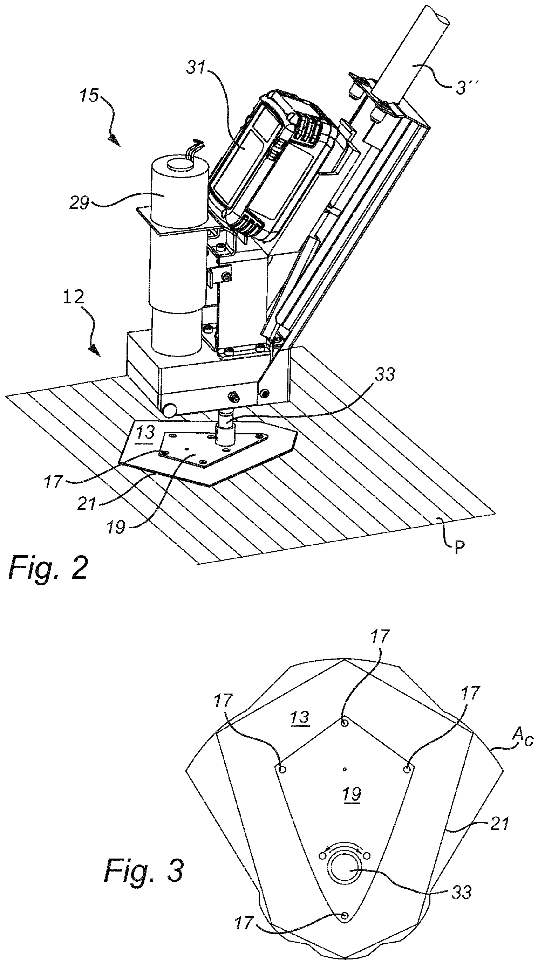

Figure 2 shows a detailed perspective view of a portion of the motorized weed chopper 1 of Figure 1 a. The blade 13 is substantially planar and arranged so that it is parallel with a geometric plane P. The motorized weed chopper is arranged so that the geometric plane P is perpendicular to a gravitational direction when the motorized weed chopper is used. Thus, the floatation effect caused by the combination of the oscillating blade 13 and the ratio between surface area A cm² of the blade 13 to the mass M kg imparts a force onto the motorized weed chopper 1, wherein this force is directed substantially opposite the gravitational direction. Figure 2 also shows the drive unit 15, as well as a motor 29 and a battery 31 being part of the drive unit 15. The battery 31 is connected to the motor 29 such that it powers the motor 29. It is also conceivable, however not shown in the appended drawings, to have a motor 29 that is connected to an external power source. The motor 29 is connected to the blade 13 via a drive shaft 33.

Figure 3 is a schematic view showing the blade 13 and the area A_{c} covered by the blade 13 as it oscillates. The directional arrows indicate the direction of the oscillations imparted onto the blade 13 by the drive unit 15.

Furthermore, any reference signs in the claims should not be construed as limiting the scope.

## Claims

1. A motorized weed chopper for soil preparation or weed removal having a mass M kg, said motorized weed chopper comprising a shaft having a first and a second end portion, wherein said first end portion is provided with a handle and said second end portion is provided with a chopping unit, which comprises a blade and a drive unit arranged to oscillate said blade in a geometric plane,
wherein said blade has a surface area A cm² in said geometric plane and wherein the ratio of said surface area A cm² to said mass M kg is 18:1 - 34:1, preferably 22:1 - 30:1, and most preferably 26:1.

2. A motorized weed chopper according to claim 1, wherein the center of gravity of said motorized weed chopper lies at least 75 % towards said second end of said shaft, measured along a line extending from said first end to said second end of said shaft.

3. A motorized weed chopper according to any one of the preceding claims, wherein said blade comprises cutting edges arranged so that when said blade oscillates, said blade cuts in every direction in said geometric plane.

4. A motorized weed chopper according to any one of the preceding claims, wherein said blade has a hexagonal shape.

5. A motorized weed chopper according to any one of the preceding claims, wherein said drive unit comprises an electric motor.

6. A motorized weed chopper according to any one of the preceding claims, wherein said motorized weed chopper further comprises a control unit connected to said drive unit, wherein said control unit is arranged to allow a user to control an oscillation frequency of said blade.

7. A motorized weed chopper according to any one of the preceding claims, wherein said geometric plane is substantially perpendicular to a gravitational direction.

8. A motorized weed chopper according to any one of the preceding claims, wherein said drive unit is arranged to oscillate said blade with an oscillation frequency of at least 10 Hz.

9. A motorized weed chopper according to any one of the preceding claims, wherein said drive unit is arranged to oscillate said blade so that a ratio of a cutting area Ac cm² to said surface area A cm² of said blade is 6:5 - 3:2, preferably 5:4 - 4:3, and most preferably 4:3, wherein said cutting area Ac cm² is the area covered by said blade when said blade is caused to oscillate.

10. A motorized weed chopper according to any one of the preceding claims, wherein said drive unit is arranged to oscillate said blade so that a ratio of a cutting area Ac cm² to said mass M kg is 24:1 - 45:1, preferably 29:1 - 40:1, and most preferably 35:1, wherein said cutting area Ac cm² is the area covered by said blade when said blade is caused to oscillate.

11. A motorized weed chopper according to any one of the preceding claims, wherein said blade is removable from said second end portion so that said blade can be replaced by a second blade.

12. A motorized weed chopper according to any one of the preceding claims, wherein an edge of said blade is straight.
